# EUROPÄISCHE PATENTSCHRIFT

(11) **EP 1 609 349 B1**
(45) Veröffentlichungstag und Bekanntmachung des Hinweises auf die Patenterteilung: **21.05.2008**
(21) Anmeldenummer: 05104987.2
(22) Anmeldetag: 08.06.2005
(51) Int. Cl.: A01D 41/127

(54) **Selbstfahrende Erntemaschine**
Self-propelled harvesting machine
Moissonneuse automotrice

(30) Priorität: 21.06.2004 DE 102004029954; 14.08.2004 DE 102004039462
(43) Veröffentlichungstag der Anmeldung: 28.12.2005
(73) Patentinhaber: DEERE & COMPANY, Moline, Illinois 61265-8098 (US)
(72) Erfinder: Pirro, Peter, 66917, Wallhalben (DE); Hofer, Jürgen, 66501, Gro bundenbach (DE); Bohrer, Stefan, 66606, St. Wendel (DE); Schäfer, Rainer, 66482, Zweibrücken (DE); Clauss , Steffen, 66509, Rieschweiler-Mühlbach (DE)
(74) Vertreter: Holst, Sönke

(56) Entgegenhaltungen:
- EP-A- 0 901 928
- DE-A1- 10 110 232
- DE-A1- 19 921 466
- US-A1- 2003 126 845

## Beschreibung

Die Erfindung betrifft eine selbstfahrende Erntemaschine mit einem Verbrennungsmotor, einem Vortriebssystem, das betreibbar ist, die Erntemaschine mit einer Vortriebsgeschwindigkeit über ein Feld zu bewegen, einer Erntegutaufnahmeeinrichtung zur Aufnahme von Erntegut von einem Feld, einer Erntegutbearbeitungseinrichtung zum Bearbeiten des aufgenommenen Ernteguts, einer Durchsatzmesseinrichtung zur Erfassung des jeweiligen Durchsatzes der Erntemaschine und einer Steuerung zur Vorgabe der Geschwindigkeit des Verbrennungsmotors, die betreibbar ist, die Geschwindigkeit des Verbrennungsmotors abhängig vom Signal der Durchsatzmesseinrichtung zu variieren.

Feldhäcksler sind Erntemaschinen, die im Erntebetrieb auf einem Feld liegendes oder stehendes Erntegut aufnehmen, häckseln und auf ein Transportfahrzeug auswerfen. Das Transportfahrzeug fährt neben oder hinter dem Feldhäcksler her. Obwohl schon vorgeschlagen wurde, den Transportbehälter auf den Feldhäcksler aufzusatteln (EP 0 421 042 A, DE 196 48 324 A) oder einen Transportanhänger an einer Anhängekupplung des Feldhäckslers anzubringen, haben sich in der Praxis selbstfahrende Transportfahrzeuge durchgesetzt, die unabhängig vom Feldhäcksler fahren. Dadurch lässt sich bei der Futterernte eine Transportkette vom Feld zum Silo mit mehreren Transportfahrzeugen aufbauen.

Beim Überladen des Ernteguts fährt der Fahrer des Transportfahrzeugs neben oder - insbesondere beim Einfahren in das Feld - hinter dem Feldhäcksler her. Um Verluste durch Erntegut zu vermeiden, das statt in den Transportbehälter zu gelangen auf den Boden fällt, müssen beide Fahrzeuge mit zumindest näherungsweise gleicher Geschwindigkeit fahren. Zur Synchronisierung wurde vorgeschlagen, eine drahtlose Kommunikationsverbindung vorzusehen, mit der vom Feldhäcksler aus die Bewegung des Transportfahrzeugs gesteuert wird (DE 100 64 860 A) oder umgekehrt (DE 100 57 374 A). Derartige Systeme haben sich aufgrund ihrer Komplexität bisher in der Praxis nicht durchgesetzt. Derzeit gibt daher der Fahrer des mit einem hydraulischen Vortriebsystem ausgestatteten Feldhäckslers eine Vortriebsgeschwindigkeit vor, die vom Fahrer des Transportfahrzeugs einzuhalten ist.

Die Drehzahl des Verbrennungsmotors des Feldhäckslers ist in der Regel beim Erntebetrieb konstant, durch den Bediener aber in gewissen Grenzen variierbar (DE 199 21 697 A, DE 101 10 232 A). Der Kraftstoffverbrauch ist unnötig hoch, wenn der Verbrennungsmotor mit höheren Drehzahlen betrieben, aber bei geringen Durchsätzen nur wenig belastet wird. Andererseits besteht bei kleineren Drehzahlen die Gefahr des Steckenbleibens des Verbrennungsmotors oder der Bildung eines Gutstaus im Auswurfkanal, falls höhere Durchsätze zu verarbeiten sind.

Es wurde auch vorgeschlagen, die Drehzahl des Verbrennungsmotors abhängig von der Breite des Erntevorsatzes und der Länge des Austragschachts des Feldhäckslers vorzugeben (DE 101 34 137 A), um bei geringerer Auslastung des Feldhäckslers den Kraftstoffverbrauch zu reduzieren. Hier wird zwar eine Anpassung der Drehzahl des Verbrennungsmotors an den Durchsatz durchgeführt, doch ist sie relativ grob und hängt nur vom erwarteten, nicht vom tatsächlichen Durchsatz ab.

Weiterhin wurde vorgeschlagen, die Vortriebsgeschwindigkeit des Feldhäckslers vom jeweiligen Durchsatz abhängig zu gestalten (DE 199 21 466 A). Die Drehzahl des Verbrennungsmotors bleibt konstant. Dadurch kann der Verbrennungsmotor des Feldhäckslers zwar optimal ausgelastet werden, jedoch wird sich die Vortriebsgeschwindigkeit bei variierenden Bestandsdichten ändern, was es für den Fahrer des Transportfahrzeugs schwierig oder unmöglich macht, synchron neben dem Feldhäcksler her zu fahren.

Bei Mähdreschern ist die Drehzahl des Verbrennungsmotors im Erntebetrieb ebenfalls im Allgemeinen konstant. Die Dresch- und Trenneinrichtungen werden über Getriebe mit veränderlichem Übersetzungsverhältnis angetrieben, beispielsweise Variatoren (DE 199 17 171 A) oder Planetengetriebe, bei denen ein Element vom Verbrennungsmotor und ein Element zur Drehzahlvariation hydraulisch angetrieben wird und eines als Abtrieb dient (DE 199 24 304 A). Es wurde auch vorgeschlagen, die Drehzahl des Verbrennungsmotors zu verstellen, um eine gewünschte Drehzahl des Dresch- und Trennrotors zu erreichen (DE 198 57 046 A). Auch hier ist die Drehzahl des Verbrennungsmotors vom Erntegutdurchsatz unabhängig und daher der Betriebsstoffverbrauch nicht immer optimal.

Die Vortriebsgeschwindigkeit wird bei Mähdreschern im Stand der Technik ebenfalls entweder durch den Bediener vorgegeben oder selbsttätig anhand des Durchsatzes geregelt (DE 199 21 466 A). Um bei einer derartigen Regelung die Übergabe des geernteten Korns vom Korntank des Mähdreschers auf ein Transportfahrzeug zu erleichtern, ist es bekannt, bei aktiviertem Entladeförderer die Änderungen in der Vortriebsgeschwindigkeit mit kleinerem Verstärkungsfaktor auszuführen (Mähdrescher John Deere STS 9880). Dadurch wird die Geschwindigkeit zwar weniger stark variiert, aber sie ist nicht konstant. Außerdem ist dann die Auslastung des Mähdreschers nicht unbedingt optimal.

In der DE 38 10 724 A wird vorgeschlagen, bei einem Mähdrescher das Drehmoment zu erfassen, das der Verbrennungsmotor an die angetriebenen Elemente abgibt. Falls das gemessene Drehmoment kleiner als ein bestimmter Schwellenwert ist, was darauf hinweist, dass bei geringeren Durchsätzen, beispielsweise bei der Ernte von Sonderkulturen oder von nicht rechteckigen Schlägen, weniger Leistung abgenommen wird als der Verbrennungsmotor bei seiner Drehzahl abgeben kann, wird die Drehzahl des Verbrennungsmotors reduziert. Ein Getriebe zwischen dem Verbrennungsmotor und den angetriebenen Elementen, wie der Dreschtrommel, hält die Drehzahl der angetriebenen Elemente trotz der Drehzahländerung des Verbrennungsmotors konstant. Hier beruht die Drehzahlsteuerung auf einer Messung des vom Verbrennungsmotor abgegebenen Drehmoments. Diese Messung ist relativ ungenau, da sie nur zu einem Teil auf dem Durchsatz basiert, während die vom Vortriebssystem abgenommene Leistung mit in den Messwert eingeht.

Die als gattungsbildend angesehene EP 0 901 928 A beschreibt eine selbstfahrende Erntemaschine in Form eines Mähdreschers oder eines Feldhäckslers, in deren Antriebssträngen für den Fahrantrieb und die Nebenabtriebe Belastungssensoren angeordnet sind. Wird festgestellt, dass die erfasste Belastung in einem der Antriebsstränge einen Schwellenwert übersteigt, erfolgt eine Verminderung der Drehzahl des Verbrennungsmotors. Ein weiterer Sensor kann den Erntegutdurchsatz erfassen, bevor das Erntegut ein leistungsbegrenzendes Arbeitsaggregat erreicht, und im Fall eines Anstiegs des Erntegutdurchsatzes kurzfristig die Leistung bzw. Drehzahl des Verbrennungsmotors erhöhen, um eine störungsfreie Verarbeitung der angefallenen Erntegutmenge sicherzustellen. Analog kann die Motorleistung bei sich verringerndem Leistungsbedarf vermindert werden, um Kraftstoff zu sparen. Es wird auch vorgeschlagen, bei einem Mähdrescher Leistungsreserven des Antriebsmotors zu mobilisieren, wenn von der Sensorik eine nicht vollständige Auslastung des Fahrantriebs oder eines der Nebenantriebe ermittelt wird. Durch die variable, durchsatzabhängige Fahrgeschwindigkeit ergeben sich ebenfalls Probleme bei der Überladung des Ernteguts auf ein Transportfahrzeug.

Das der Erfindung zu Grunde liegende Problem wird darin gesehen, die genannten Nachteile zu überwinden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Drehzahl oder Geschwindigkeit des Verbrennungsmotors der Erntemaschine, bei der es sich beispielsweise um einen selbstfahrenden Mähdrescher oder Feldhäcksler handelt, selbsttätig abhängig von einem gemessenen Durchsatz der Erntemaschine zu steuern. Die Drehzahl des Verbrennungsmotors wird selbsttätig an die jeweilige Belastung angepasst, so dass sich der Kraftstoffverbrauch minimiert und der abgegebene Geräuschpegel reduziert wird. Die Vortriebsgeschwindigkeit der Erntemaschine bleibt im Erntebetrieb konstant und wird durch den Bediener der Erntemaschine vorgegeben. Dadurch wird die Übergabe des verarbeiteten Ernteguts an ein Transportfahrzeug, das neben oder hinter der Erntemaschine herfährt, erleichtert. Zusätzlich wäre aber auch eine Fernsteuerung des Transportfahrzeugs denkbar, die Letzteres synchron neben oder hinter der Erntemaschine herfahren lässt.

Die Funktion der Erntegutbearbeitungseinrichtung und ggf. auch der Erntegutaufnahmeeinrichtung der Erntemaschine hängt, je nach Typ und Ausführungsform, mehr oder weniger stark von ihrer Betriebsgeschwindigkeit ab. Es ist denkbar, dass die im Betrieb auftretenden Variationen der Drehzahl des Verbrennungsmotors nicht so groß sind, dass sie die Funktion der Erntegutbearbeitungseinrichtung und der Erntegutaufnahmeeinrichtung beeinträchtigen. In diesem Fall erübrigt sich ein Getriebe zwischen dem Verbrennungsmotor und der Erntegutbearbeitungseinrichtung und ggf. auch der Erntegutaufnahmeeinrichtung, mit dem die Drehzahl letzterer unabhängig von der Drehzahl des Verbrennungsmotors gehalten wird. In allen anderen Fällen ist ein derartiges Getriebe jedoch sinnvoll. In einer bevorzugten Ausführungsform ist es ein Planetengetriebe, das ein vom Verbrennungsmotor her mechanisch angetriebenes Element umfasst, ein durch Fremdkraft mit variabler Drehzahl angetriebenes Element, und ein Element, das mit der Erntegutbearbeitungseinrichtung und ggf. auch der Erntegutaufnahmeeinrichtung in Antriebsverbindung steht.

Ein potentielles Problem, insbesondere bei relativ geringen Durchsätzen, die zu verminderten Drehzahlen des Verbrennungsmotors führen, liegt in möglichen relativ kurzfristigen Anstiegen der Durchsatzmengen, die aufgrund fehlender Leistungsreserven des Verbrennungsmotors zu seinem Absterben (Stehen bleiben) führen können. Dabei bleibt nämlich nicht nur der Verbrennungsmotor stehen, sondern es entstehen oft auch Gutstaus innerhalb der Erntemaschine, deren Beseitigung sehr aufwändig ist. Es ist also sinnvoll, den Durchsatz möglichst früh zu erfassen, um der Steuerung ggf. ein rechtzeitiges Anheben der Drehzahl des Verbrennungsmotors zu ermöglichen.

Eine vorausschauende Durchsatzmesseinrichtung arbeitet daher vorzugsweise bereits stromauf der Erntegutaufnahmeeinrichtung mit dem aufzunehmenden Erntegut zusammen. In einer anderen Ausführungsform kann die Durchsatzmesseinrichtung jedoch in den Erntevorsatz integriert sein und beispielsweise die Auslenkung einer Querförderschnecke einer Pick-Up oder eines Maisgebisses erfassen, die durch die Erntegutmenge bestimmt wird. Hierbei ist die zum Beschleunigen des Verbrennungsmotors verfügbare Zeit, insbesondere bei kleinen Schnittlängen, jedoch relativ kurz.

Eine geeignete, stromauf der Erntegutaufnahmeeinrichtung mit dem Erntegut zusammenwirkende Durchsatzmesseinrichtung ist ein Bildverarbeitungssystem mit einer Kamera oder zwei Kameras, um ein zwei- oder dreidimensionales Bild des Feldes vor der Erntemaschine aufzunehmen. Das Bildverarbeitungssystem bestimmt anhand des aufgenommenen Bildes die Umrisse des Ernteguts und daraus dessen Volumen. Anhand der Farbe des Ernteguts kann das Bildverarbeitungssystem die Masse des zu erwartenden Ernteguts noch genauer abschätzen. Ein geeignetes Bildverarbeitungssystem, das auch zur selbsttätigen Lenkung der Erntemaschine dienen kann, wird in der DE 103 51 861 A und den dort genannten Referenzen beschrieben, deren Inhalt durch Verweis mit in die vorliegenden Unterlagen aufgenommen wird.

Eine andere geeignete Durchsatzmesseinrichtung ist ein Ultraschallsensor, der an der Vorderseite der Erntegutaufnahmeeinrichtung befestigt sein kann. Das empfangene Reflexionssignal hängt in Amplitude und Laufzeit von den Konturen und der Dichte des Ernteguts ab. Denkbar ist auch die Verwendung eines abtastenden Lasersensors, der den Bereich vor der Erntemaschine sukzessive abrastert. Er ermöglicht, die Konturen des Ernteguts zu erfassen und daraus die Erntegutmenge zu bestimmen. Derartige Lasersensoren sind in der DE 197 26 917 A und DE 101 30 665 A beschrieben, deren Inhalt durch Verweis mit in die vorliegenden Unterlagen aufgenommen wird.

In den Zeichnungen ist ein nachfolgend näher beschriebenes Ausführungsbeispiel der Erfindung dargestellt. Es zeigt:
- Fig. 1: eine Erntemaschine mit einer Erntegutaufnahmeeinrichtung in Seitenansicht und in schematischer Darstellung, und
- Fig. 2: ein Schema des Antriebssystems der Erntemaschine und der Erntegutaufnahmeeinrichtung.

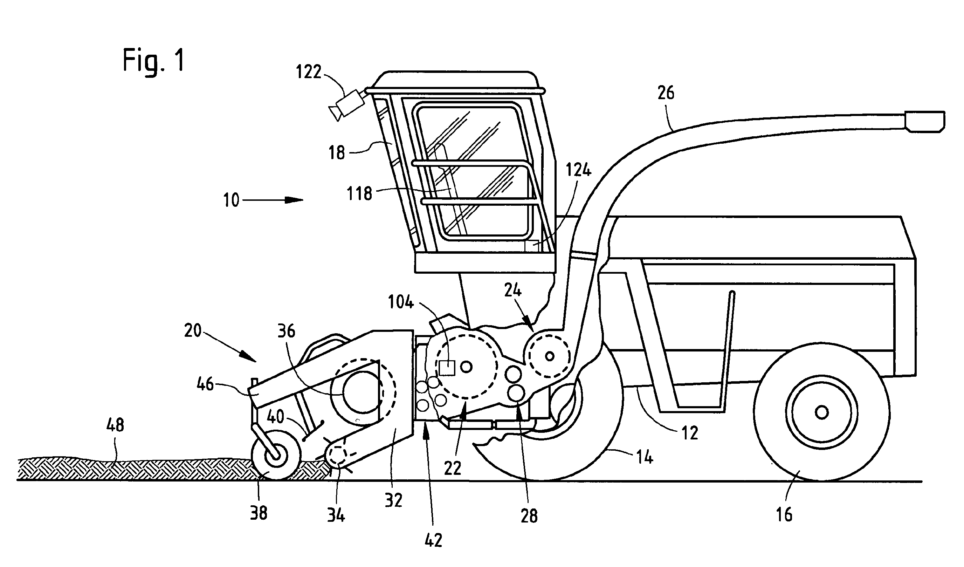

In der Figur 1 ist eine Erntemaschine 10 in der Art eines selbstfahrenden Feldhäckslers dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus eine Erntegutaufnahmeeinrichtung 20 einsehbar ist. Mittels der Erntegutaufnahmeeinrichtung 20 vom Boden aufgenommenes Gut, z. B. Gras oder dergleichen, wird über einen Einzugsförderer 42 mit Zuführwalzen, die innerhalb eines Einzugsgehäuses an der Frontseite des Feldhäckslers 10 angeordnet sind, einer Erntegutbearbeitungseinrichtung 22 in Form einer Häckseltrommel zugeführt, die es in kleine Stücke häckselt und es einer Fördervorrichtung 24 aufgibt. Das Gut verlässt die Erntemaschine 10 zu einem nebenher fahrenden Anhänger über einen um eine etwa vertikale Achse drehbaren und in der Neigung verstellbaren Austragschacht 26. Zwischen der Erntegutbearbeitungseinrichtung 22 und der Fördervorrichtung 24 erstreckt sich eine Nachzerkleinerungsvorrichtung 28, durch die das zu fördernde Gut der Fördervorrichtung 24 tangential zugeführt wird.

Die Erntegutaufnahmeeinrichtung 20 ist in diesem Ausführungsbeispiel als so genannte Pick-Up ausgebildet. Die Erntegutaufnahmeeinrichtung 20 baut sich auf einem Gestell 32 auf und stützt sich über beidseitig angebrachte Stützräder 38, die über je einen Träger 46 am Gestell 32 befestigt sind, auf dem Erdboden ab. Die Aufgabe der Erntegutaufnahmeeinrichtung 20 besteht darin, auf dem Boden eines Felds in einem Schwad 48 abgelegtes Erntegut aufzunehmen und es der Erntemaschine 10 zur weiteren Bearbeitung zuzuführen. Hierzu wird die Erntegutaufnahmeeinrichtung 20 während des Erntebetriebes mit geringem Abstand zum Erdboden über das Feld bewegt, während er zum Transport auf einer Strasse oder auf Wegen angehoben wird. Zur Erntegutaufnahmeeinrichtung 20 gehört ein Abgabeförderer 36 in Form einer Förderschnecke, die das aufgenommene Gut von den Seiten der Erntegutaufnahmeeinrichtung 20 zu einer in der Mitte gelegenen, nicht gezeigten Abgabeöffnung fördert, hinter der der Einzugsförderer 42 folgt. Die Erntegutaufnahmeeinrichtung 20 weist auch einen, wie auch der Abgabeförderer 36, rotativ angetriebenen Aufnahmeförderer 34 auf, der unterhalb des Abgabeförderers 36 angeordnet ist und mit seinen Förderzinken das Gut vom Erdboden anhebt, um es dem Abgabeförderer 36 zu übergeben. Außerdem ist ein Niederhalter 40 in Form eines über dem Aufnahmeförderer 34 angeordneten Bleches am Gestell 32 befestigt.

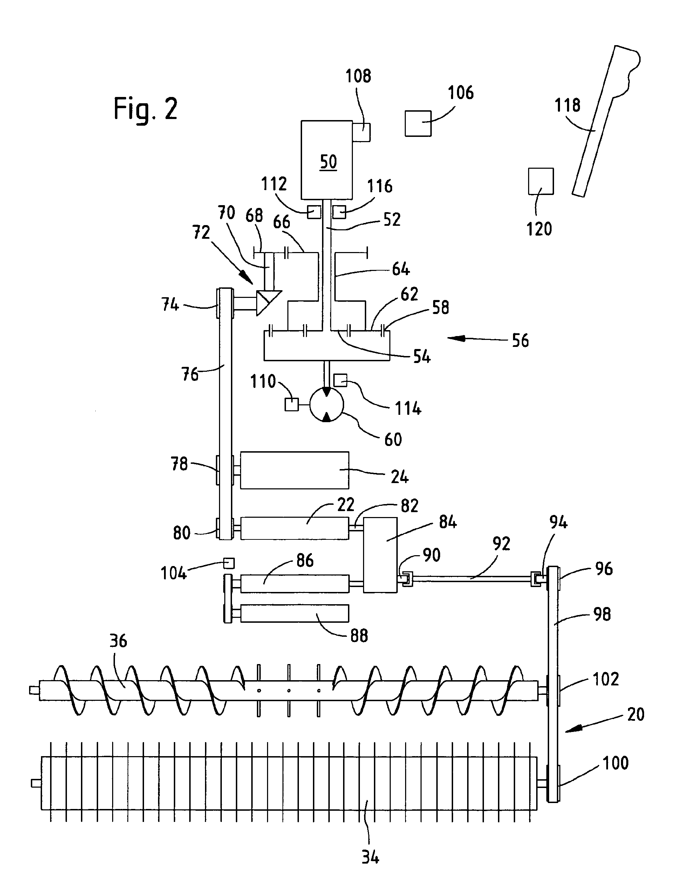

In der Figur 2 ist der Antriebsstrang der Erntemaschine 10 und der Erntegutaufnahmeeinrichtung 20 dargestellt. Ein am Rahmen 12 der Erntemaschine 10 befestigter Verbrennungsmotor 50, in der Regel ein Dieselmotor, treibt über eine Welle 52 ein Sonnenrad 54 eines Planetengetriebes 56 an. Das Ringrad 58 des Planetengetriebes 56 ist mit einem Hydraulikmotor 60 verbunden. Der Planetenradträger 62 des Planetengetriebes 56 steht über eine Hohlwelle 64, durch die sich die Welle 52 erstreckt, mit einem Zahnrad 66 in Antriebsverbindung, das mit einem anderen Zahnrad 68 kämmt.

Das Zahnrad 68 treibt über eine Welle 70, ein Kegelradgetriebe 72 und eine Riemenscheibe 74 einen Riemen 76 an, der mit einer Riemenscheibe 78, welche die Fördervorrichtung 24 antreibt, und mit einer Riemenscheibe 80 zusammenwirkt, die die Erntegutbearbeitungseinrichtung 22 antreibt. Die Erntegutbearbeitungseinrichtung 22 treibt wiederum eine Welle 82 an, die die Eingangswelle eines Schnittlängengetriebes 84 ist.

Das Schnittlängengetriebe 84 enthält Antriebselemente zum Antrieb unterer Vorpresswalzen 86, 88 und oberer Vorpresswalzen (nicht in Figur 2 dargestellt, s. aber Figur 1) des Einzugsförderers 42. Die Drehzahl der Vorpresswalzen 86, 88 kann durch das Schnittlängengetriebe 84 in Stufen oder stufenlos verändert werden.

Das Schnittlängengetriebe 84 leitet das Drehmoment von der Erntegutbearbeitungseinrichtung 22 auch mechanisch an einen Wellenstummel 90 weiter, wobei eine stufenlose oder stufige Übersetzung möglich ist. An dem Wellenstummel 90 ist eine Gelenkwelle 92 mit fester oder variabler Länge lösbar befestigt. Die Gelenkwelle 92 erstreckt sich vom Wellenstummel 90 des Schnittlängengetriebes 84 zu einem Wellenstummel 94 an der Erntegutaufnahmeeinrichtung 20. Der Wellenstummel 84 treibt ein Ritzel 96 an, das über einer Kette 98 mit einem Ritzel 100 in Antriebsverbindung steht. Das Ritzel 100 treibt den Aufnahmeförderer 34 an. Außerdem treibt die Kette 98 über ein anderes Ritzel 102 den Abgabeförderer 36 an.

Die oberen Vorpresswalzen des Einzugsförderers 42 sind gegen Federkraft nach oben beweglich. Ihre Position ist daher ein Maß für den Durchsatz der Erntemaschine 10. Ihnen ist eine Durchsatzmesseinrichtung zugeordnet, die ihre vertikale Position erfasst und mit dem Bezugszeichen 104 versehen ist. Anstelle dieses Ausführungsbeispiels kann jede andere geeignete Durchsatzmesseinrichtung 104 verwendet werden. Es wird insbesondere auf die Kamera 122 und das Bildverarbeitungssystem 124 verwiesen, die weiter unten näher erläutert werden. Das Ausgangssignal der Durchsatzmesseinrichtung 104 wird einer Steuerung 106 zugeführt, die weiterhin mit einer Motorsteuerung 108 des Verbrennungsmotors 50 und einem Aktor 110 zur Verstellung der Position einer Taumelplatte des Hydraulikmotors 60 verbunden ist. Der Hydraulikmotor 60 wird durch eine Pumpe 112, die vom Verbrennungsmotor 50 angetrieben wird, mit unter Druck stehendem Hydraulikfluid versorgt. Durch Verändern der Stellung der Taumelplatte mit dem Aktor 110 ist die Drehzahl des Hydraulikmotors 60 einstellbar. Die Steuerung ist außerdem mit einem Drehzahlsensor 114 zur Erfassung der Drehzahl des Hydraulikmotors 60 verbunden, während die Motorsteuerung 108 mit einem Drehzahlsensor 116 zur Erfassung der Drehzahl des Verbrennungsmotors 50 verbunden ist.

Im normalen Erntebetrieb veranlasst die Steuerung 106 die Motorsteuerung 108 zunächst, den Verbrennungsmotor 50 mit seiner Nenndrehzahl oder einer anderen, geeigneten Drehzahl, z. B. Leerlaufdrehzahl oder einer zwischen Leerlaufdrehzahl und Nenndrehzahl liegenden Drehzahl, laufen zu lassen. Der Hydraulikmotor 60 steht zunächst. Die Erntegutbearbeitungseinrichtung 22, die Fördervorrichtung 24 und der Einzugsförderer 42 sowie die angetriebenen Elemente der Erntegutaufnahmeeinrichtung 20 werden mit ihrer Sollgeschwindigkeit angetrieben. Durch das Schnittlängengetriebe 84 kann die Geschwindigkeit des Einzugsförderers 42 und damit bei gegebener Geschwindigkeit der Erntegutbearbeitungseinrichtung 22 die Schnittlänge variiert werden. Dabei kommt vorzugsweise ein Planetengetriebe mit einem fremdkraftbetätigten Motor zum Einsatz, wie in der DE 198 12 500 A beschrieben.

Über einen Fahrhebel 118, dem ein Positionssensor 120 zugeordnet ist, erhält die Steuerung 106 eine Information über die gewünschte Vortriebsgeschwindigkeit. Sie steuert die Taumelplatten von Hydraulikmotoren (nicht eingezeichnet) zum Antrieb der Räder 14, 16 derart an, dass sie die Erntemaschine 10 konstant mit der vom Bediener vorgegebenen Geschwindigkeit in Vorwärtsrichtung über ein Feld bewegen. Die Pumpe zum Antrieb der Hydraulikmotoren des Vortriebssystems wird durch den Verbrennungsmotor 50 angetrieben; sie könnte auch mit der Pumpe 112 identisch sein. Bei der Straßenfahrt kann die Drehzahl des Verbrennungsmotors 50 gegenüber der Nenndrehzahl herabgesetzt und fest oder der jeweiligen Belastung entsprechend variabel sein.

Die Steuerung 106 erhält nach Aufnahme des Erntevorgangs ein Signal von der Durchsatzmesseinrichtung 104, das eine Information über den jeweiligen Durchsatz enthält. Je geringer der Durchsatz ist, umso kleiner ist der Sollwert für die Geschwindigkeit des Verbrennungsmotors 50, der von der Steuerung 106 an die Motorsteuerung 108 übersandt wird. Die Nenndrehzahl des Verbrennungsmotors 50 wird erreicht, wenn der Durchsatz etwa dem maximal möglichen Durchsatz der Erntemaschine entspricht. Liegt überhaupt kein Durchsatz vor, weist die Steuerung 106 die Motorsteuerung 108 an, näherungsweise die Leerlaufdrehzahl einzustellen. Bei zwischen diesen Extremwerten liegenden Durchsätzen wählt die Steuerung 106 jeweils die verbrauchsgünstigste Drehzahl aus, die der bei dem gegebenen Durchsatz aufzubringenden Leistung entspricht, und gibt sie an die Motorsteuerung 108 weiter. Dadurch erhält man eine kraftstoffsparende Betriebsweise des Verbrennungsmotors 50. Die Information über die jeweilige Vortriebsgeschwindigkeit, die durch den Positionssensor 120 bereitgestellt wird, und vorzugsweise auch über eine Hangneigung, bzw. ein daraus abgeleiteter Leistungsbedarf für den Vortrieb der Erntemaschine 10, wird dabei von der Steuerung 106 berücksichtigt.

Um die Drehzahl der Erntegutbearbeitungseinrichtung 22, der Fördervorrichtung 24, des Einzugsförderers 42 und der angetriebenen Elemente der Erntegutaufnahmeeinrichtung 20 zumindest näherungsweise konstant zu halten, erhält die Steuerung 106 von der Motorsteuerung 108 eine Information über die Drehzahl des Verbrennungsmotors 50, die auf dem Signal des Drehzahlsensors 116 beruht. Die Information über die Drehzahl des Verbrennungsmotors 50 kann auch auf dem Sollwert beruhen, den die Steuerung 106 an die Motorsteuerung 108 übergeben hat.

Abhängig von der jeweiligen Drehzahl des Verbrennungsmotors 50 steuert die Steuerung 106 den Aktor 110 an, so dass die Ausgangsdrehzahl des Planetengetriebes 56 an der Hohlwelle 64 konstant und von der Drehzahl des Verbrennungsmotors 50 unabhängig bleibt. Kleinere Schwankungen sind unbedenklich, da die Schnittlänge wegen des gemeinsam vom Abtrieb des Planetengetriebes 56 abgeleiteten Antriebs der Erntegutbearbeitungseinrichtung 22 und des Einzugsförderers 42 konstant bleibt, und werden von der Steuerung 106 zur Vermeidung unnötiger Verstellbewegungen des Aktors 110 daher nicht berücksichtigt. Durch die beschriebene Regelung wird aber verhindert, dass die Förderwirkung der Erntegutbearbeitungseinrichtung 22 oder der Fördervorrichtung 24 bei kleineren Drehzahlen des Verbrennungsmotors 50 beeinträchtigt wird.

Zusätzlich zur Durchsatzmesseinrichtung 104 ist an der Vorderseite der Fahrerkabine 18 eine elektronische Kamera 122 angebracht, die kontinuierlich Bilder des Felds vor der Erntemaschine 10 aufnimmt. Das Signal der Kamera 122 wird einer Durchsatzmesseinrichtung 124 in Form eines Bildverarbeitungssystems zugeführt, die im Betrieb das Schwad 48 vom Boden unterscheidet und das Volumen der demnächst aufzunehmenden Teile des Schwads 48 und den Durchsatz berechnet. Das Durchsatzsignal der Durchsatzmesseinrichtung 124 wird der Steuerung 106 zugeführt. Sie vergleicht die Signale der Durchsatzmesseinrichtung 104 und der Durchsatzmesseinrichtung 124, unter Berücksichtigung des Zeitversatzes zwischen den Zeitpunkten, an denen diese jeweils mit dem Erntegut zusammenwirken, und kalibriert damit das Ausgangssignal der Durchsatzmesseinrichtung 124. Zeigt das Ausgangssignal der Durchsatzmesseinrichtung 124 der Steuerung 106 einen Anstieg des zu erwartenden Durchsatzes an, beschleunigt letztere rechtzeitig den Verbrennungsmotor 50 durch entsprechende Signale an die Motorsteuerung 108. Dadurch wird ein zu tiefes Absinken der Drehzahl oder gar ein Absterben des Verbrennungsmotors 50 verhindert. Es wäre auch möglich, auf die Durchsatzmesseinrichtung 104 zu verzichten und nur die Kamera 122 und die Durchsatzmesseinrichtung 124 zur Bestimmung des Durchsatzes heranzuziehen.

## Patentansprüche

1. Selbstfahrende Erntemaschine (10), mit einem Verbrennungsmotor (50), einem Vortriebssystem, das betreibbar ist, die Erntemaschine (10) mit einer Vortriebsgeschwindigkeit über ein Feld zu bewegen, einer Erntegutaufnahmeeinrichtung (20) zur Aufnahme von Erntegut von einem Feld, einer Erntegutbearbeitungseinrichtung (22) zum Bearbeiten des aufgenommenen Ernteguts, einer Durchsatzmesseinrichtung (104, 124) zur Erfassung des jeweiligen Durchsatzes der Erntemaschine (10) und einer Steuerung (106) zur Vorgabe der Geschwindigkeit des Verbrennungsmotors (50), die betreibbar ist, die Geschwindigkeit des Verbrennungsmotors (50) abhängig vom Signal der Durchsatzmesseinrichtung (104, 124) zu variieren, **dadurch gekennzeichnet, dass** die Vortriebsgeschwindigkeit durch einen Bediener der Erntemaschine (10) vorgebbar und vom gemessenen Durchsatz unabhängig ist und dass die Steuerung (106) betreibbar ist, jeweils die verbrauchsgünstigste Drehzahl des Verbrennungsmotors (50) vorzugeben, die der bei einem gegebenen Durchsatz aufzubringenden Leistung entspricht.

2. Erntemaschine (10) nach Anspruch 1, **gekennzeichnet durch** eine Überladeeinrichtung zum Überladen des von der Erntegutbearbeitungseinrichtung (22) bearbeiteten Ernteguts auf ein Transportfahrzeug.

3. Erntemaschine nach einem der Ansprüche 1 oder 2, **gekennzeichnet durch** ein Getriebe mit veränderbarem Übersetzungsverhältnis zwischen dem Verbrennungsmotor (50) und der Erntegutbearbeitungseinrichtung (22) und/oder der Erntegutaufnahmeeinrichtung (20), **durch** welches die Geschwindigkeit der Erntegutbearbeitungseinrichtung (22) und/oder der Erntegutaufnahmeeinrichtung (20) zumindest etwa konstant und damit von der Drehzahl des Verbrennungsmotors (50) unabhängig gehalten werden kann.

4. Erntemaschine nach Anspruch 3, **dadurch gekennzeichnet, dass** das Getriebe ein Planetengetriebe (56) umfasst, bei dem ein Element vom Verbrennungsmotor (50) und ein Element durch Fremdkraft angetrieben wird und eines als Abtrieb dient.

5. Erntemaschine (10) nach einem der vorhergehenden Ansprüche, **dadurch gekennzeichnet, dass** die Durchsatzmesseinrichtung (124) derart vorausschauend arbeitet, dass die Steuerung (106) im Falle eines Anstiegs des Durchsatzes die Drehzahl des Verbrennungsmotors (50) rechtzeitig anheben kann, um ein Absterben des Verbrennungsmotors (50) zu verhindern.

6. Erntemaschine (10) nach Anspruch 5, **dadurch gekennzeichnet, dass** die Durchsatzmesseinrichtung (124) stromauf der Erntegutaufnahmeeinrichtung (20) mit dem Erntegut zusammenwirkt.

7. Erntemaschine (10) nach Anspruch 5 oder 6, **dadurch gekennzeichnet, dass** die Durchsatzmesseinrichtung (124) eine Kamera (122) und ein Bildverarbeitungssystem umfasst, das anhand eines von der Kamera (122) aufgenommenen Bildsignals eine zu erwartende Durchsatzmenge bestimmt.

8. Erntemaschine (10) nach Anspruch 5 oder 6, **dadurch gekennzeichnet, dass** die Durchsatzmesseinrichtung einen das Erntegut vor der Erntemaschine (10) abtastenden, auf Amplituden- und/oder Laufzeitmessung basierenden Lasersensor oder einen Ultraschallsensor umfasst.

## Claims

1. Self-propelled harvesting machine (10) comprising an internal combustion engine (50), a propulsion system, which may be operated to move the harvesting machine (10) at a rate of advance over a field, a crop collecting device (20) for collecting crops from a field, a crop processing device (22) for processing the collected crops, a throughput measuring device (104, 124) for detecting the respective throughput of the harvesting machine (10) and a control unit (106) for predetermining the speed of the internal combustion engine (50), which may be operated to vary the speed of the internal combustion engine (50) according to the signal of the throughput measuring device (104, 124), **characterized in that** the rate of advance may be predetermined by an operator of the harvesting machine (10) and is independent of the measured throughput, and **in that** the control unit (106) may be operated to predetermine respectively the speed of the internal combustion engine (50) which is most favourable in terms of fuel consumption, which corresponds to the power to be applied for a specific throughput.

2. Harvesting machine (10) according to Claim 1, **characterized by** a transfer device for transferring the crops processed by the crop processing device (22) onto a transport vehicle.

3. Harvesting machine according to one of Claims 1 or 2, **characterized by** a gear mechanism with a variable transmission ratio between the internal combustion engine (50) and the crop processing device (22) and/or the crop collecting device (20), by means of which the speed of the crop processing device (22) and/or the crop collecting device (20) is at least approximately constant and thus may be maintained independently of the speed of the internal combustion engine (50).

4. Harvesting machine according to Claim 3, **characterized in that** the gear mechanism comprises a planetary gear set (56) in which one element is driven by the internal combustion engine (50) and one element is driven by external force and one element serves as the output.

5. Harvesting machine (10) according to one of the preceding claims, **characterized in that** the throughput measuring device (124) operates in an anticipatory manner such that, in the case of an increase in the throughput, the control unit (106) is able to increase the speed of the internal combustion engine (50) in good time in order to prevent the internal combustion engine (50) from stalling.

6. Harvesting machine (10) according to Claim 5, **characterized in that** the throughput measuring device (124) cooperates with the crops, upstream of the crop collecting device (20).

7. Harvesting machine (10) according to Claim 5 or 6, **characterized in that** the throughput measuring device (124) comprises a camera (122) and an image processing system, which determines the amount of throughput to be expected by using an image signal taken by the camera (122).

8. Harvesting machine (10) according to Claim 5 or 6, **characterized in that** the throughput measuring device comprises a laser sensor or an ultrasound sensor scanning the crops upstream of the harvesting machine (10), based on a measurement of the amplitude and/or transit time.

## Revendications

1. Machine de récolte (10) automotrice, comportant un moteur à combustion interne (50), un système de propulsion, qui peut être actionné pour déplacer la machine de récolte (10) sur un champ avec une vitesse d'avance, un dispositif de ramassage de la récolte (20) destiné à ramasser les végétaux sur un champ, un dispositif de traitement de la récolte (22) destiné à traiter les végétaux ramassés, un dispositif de mesure du débit (104, 124) destiné à enregistrer le débit respectif de la machine de récolte (10) et un dispositif de commande (106), qui est destiné à définir une vitesse du moteur à combustion interne (50) et qui peut être actionné pour faire varier la vitesse du moteur à combustion interne (50) en fonction du signal du dispositif de mesure du débit (104, 124), **caractérisée en ce que** la vitesse d'avance peut être prédéfinie par un utilisateur de la machine de récolte (10) et est fonction du débit mesuré, et **en ce que** le dispositif de commande (106) peut être actionné pour définir la vitesse de rotation du moteur à combustion interne (50), laquelle est la plus favorable pour la consommation et laquelle correspond à la puissance à mettre en oeuvre avec un débit donné.

2. Machine de récolte (10) selon la revendication 1, **caractérisée par** un dispositif de déchargement destiné à décharger sur un véhicule de transport les végétaux traités par le dispositif de traitement de la récolte (22).

3. Machine de récolte selon la revendication 1 ou 2, **caractérisée par** une boîte de vitesses avec un rapport de changement de vitesse variable entre le moteur à combustion interne (50) et le dispositif de traitement de la récolte (22) et/ou le dispositif de ramassage de la récolte (20), par laquelle la vitesse du dispositif de traitement de la récolte (22) et/ou du dispositif de ramassage de la récolte (20) peut être maintenue sensiblement constante et donc indépendamment de la vitesse de rotation du moteur à combustion interne (50).

4. Machine de récolte selon la revendication 3, **caractérisée en ce que** la boîte de vitesses comporte un engrenage planétaire (56), dans lequel un élément est actionné par le moteur à combustion interne (50) et un élément est actionné par une force extérieure et un élément fait fonction d'élément mené.

5. Machine de récolte (10) selon l'une quelconque des revendications précédentes, **caractérisée en ce que** le dispositif de mesure du débit (124) travaille en prévision, de telle sorte que le dispositif de commande (106), en cas d'augmentation du débit, peut accroître en temps voulu la vitesse de rotation du moteur à combustion interne (50) pour empêcher un arrêt progressif du moteur à combustion interne (50).

6. Machine de récolte (10) selon la revendication 5, **caractérisée en ce que** le dispositif de mesure du débit (124) coopère avec les végétaux récoltés en amont du dispositif de ramassage de la récolte (20).

7. Machine de récolte (10) selon la revendication 5 ou 6, **caractérisée en ce que** le dispositif de mesure du débit (124) comporte une caméra (122) et un système de traitement d'images qui, à partir d'un signal d'image reçu par la caméra (122), détermine un volume de débit à escompter.

8. Machine de récolte (10) selon la revendication 5 ou 6, **caractérisée en ce que** le dispositif de mesure du débit comporte un capteur laser ou un capteur à ultrasons, basé sur la mesure d'amplitudes et/ou la mesure du temps de marche et explorant les végétaux devant la machine de récolte (10).
